# EUROPEAN PATENT APPLICATION

(11) **EP 1 548 371 A1**
(43) Date of publication of application: **29.06.2005**
(21) Application number: 04028553.8
(22) Date of filing: 02.12.2004
(51) Int. Cl.: F24D 17/00, F28D 20/00, F24H 9/12

(54) **Pre-heater for accumulator water heaters**

(30) Priority: 22.12.2003 IT AN20030071
(71) Applicant: THERMOWATT S.p.A., Arcevia 60011 (Ancona) (IT)
(72) Inventor: Fioroni, Fausto, 60011 Arcevia (IT); Capitanelli, Claudio, 60011 Arcevia (IT); Piaggesi, Luca, 60011 Arcevia (IT)
(74) Representative: Premru, Rok

(57) **Abstract**

This relates to a method to reduce or eliminate the negative effects of the so-called "mixing" phenomenon in a hot water accumulator tank (1).

Said method consists of the heat transfer in passive mode from the water contained in the accumulator at storage temperature (t.s) higher than that required by the user (t.ur) to the water which, due to said mixing action, is cooled to a level lower than the said temperature (t.ur) required by the user.

Other preheaters (2; 2.a; 2.b) adapted for the implementation of said method are also included.

## Description

The present invention relates to a pre-heating device adapted to improve the performance of accumulator water heaters or, more generally, hot water accumulator tanks, independently from the method used for heating the accumulated water.

Accumulator water heaters have the advantage of being able to distribute very strong water flow at the required temperature for use, much higher than the temperatures normally demanded of taps in a single hand basin or shower, and therefore they are also able to satisfy several users simultaneously using relatively contained energy power.

However, they also have the disadvantage of requiring a long period for topping up the hot water once it has been drawn off.

Another problem linked with accumulator water heaters is the so-called "mixing": each time hot water is drawn off, the cold water introduced mixes with part of the hot water contained in the tank, lowering the temperature to values that are lower than those required by the user, especially in the bottom part of the tank; this results in a reduction of the amount of accumulated water that can be used without any further heating, and therefore a reduction in the actual distribution capacity of the accumulator tank, provoking long periods of delay while the mixed water heats up again. State of the art methods have attempted to resolve the problem with scarce results, aiming simply at introducing cold water with as little turbulence as possible, distributing the cold water in the bottom part of the tank so that it mixes with the accumulated hot water as little as possible.

In a patent application requested on this date by the same Applicant as the author of the present patent (application hereafter referred to as PA1), among other aspects, it has been proposed to reduce or eliminate the mixing effects by pre-heating the water introduced into the accumulator water heater in a manner defined as "active" with the aid of energy taken from outside the system; this auxiliary aid in PA1 is supplied by an electric heater equipped with relative adjustment and control means. Naturally this provides certain advantages, and till today this is the only solution applicable when the accumulator water heater is set to maintain the temperature at values much lower than the possible maximum. However, the "active" solution proposed in PA1 does also involve certain costs for the electrical heater and the essential relative means of adjustment and control mentioned previously.

The principal aim of the present invention is to indicate a method and a "passive" device able to eliminate all or part of the problems caused by mixing, according to the choices made by the designer and the work conditions. In this case the term "passive" refers to a method and a device that do not require the supply of external energy or adjustment and control means.

A further aim of the present invention, at least in reference to the preferred variants, is to achieve the principle aim also in hot water accumulator tanks already installed and operating.

Another further aim of the present invention, at least in reference to the preferred variants, is to advantageously combine the teachings with those provided in the PA1 document.

These and other aims are achieved according to the invention, by means of a simple additional device, herein referred to as pre-heater as well as a preheating method that will be explained with reference to preferred but by no means exclusive variants, in the description below, the appended drawings and claims, which comprise an integral part of the description itself.

Figure 1 shows a traditional accumulator water heater according to known state of the art, under which is mounted a pre-heater according to possible variants of the invention.

Figure 2 shows a standard type hot water accumulator tank inside which has been installed a pre-heater according to possible variants of the invention.

Figure 3 shows a standard type hot water accumulator tank inside which has been installed a pre-heater according to further possible variants of the invention.

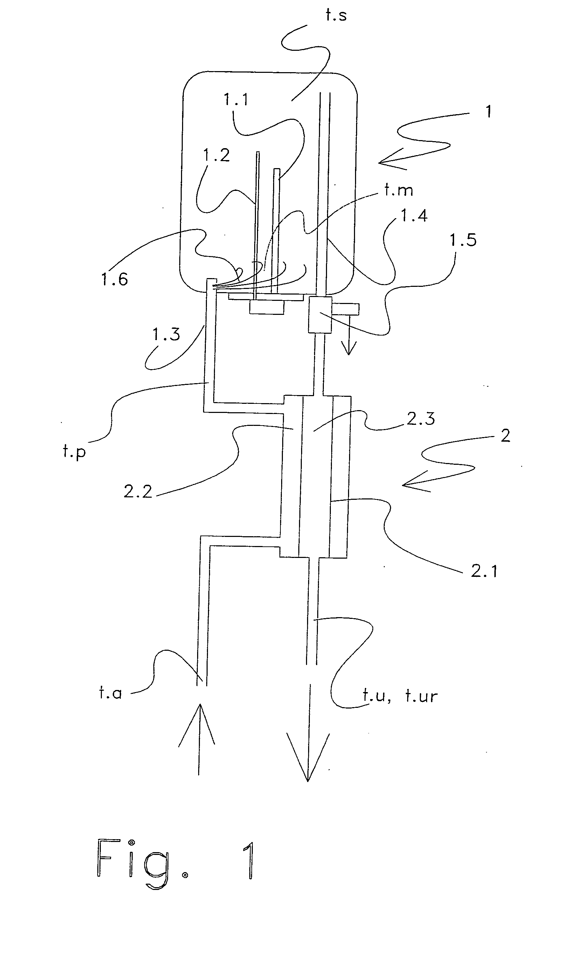

In figure 1, the numeral 1 refers to an electric accumulator water heater. Of said accumulator water heater 1 are shown the electrical heating resistors 1.1; the accumulated water temperature control means 1.2 (generally a thermostat); an intake pipe 1.3, and an outlet pipe 1.4; the safety valve 1.5. It must be remembered at this point that the device and method that will be illustrated below can be applied very advantageously to any type of hot water accumulator tank whatever the means used and wherever the system is installed, therefore element 1 will be hereafter referred to for brevity as "accumulator 1", on the understanding that said accumulator, in many practical cases may be a gas or electric accumulator water heater.

The control means 1.2 are generally programmed to maintain the water at a storage temperature t.s which is deliberately kept at a much higher temperature than that required by the user in order to accumulate the greatest amount of thermal energy possible. Normally the t.s ranges between 75 and 80 °C on installations that wish to take maximum advantage of the hot water accumulator capacity, and with a t.ur ranging between 40 and 45 °C.

Each time water is drawn off from the outlet pipe 1.4 at storage temperature t.s, an identical amount of supply water at main line temperature t.a (i.e. 15°C) is introduced through the intake pipe 1.3 forming vortexes 1.6 that force the introduced water to mix with part of the hot water already accumulated at a temperature higher than that required by the user (t.ur); the mixture obtained changes at least part of the said previously accumulated water to a temperature t.m, that when drawn off in sufficient quantity, has lower values than the t.ur required by the user, making it impossible for use until it has been reheated again, even though thermal energy has not been lost but has simply been transferred. However, the water that is delivered to the user through pipe 1.4, taken from the top of the tank, is at a much higher storage temperature t.s than the t.ur required by the user, and therefore, before use it is cooled by diluting it with cold water or by using an automatic mixer, or by manually mixing using the taps.

Figure 1 also shows a preheater 2 according to the invention; this is composed of an instantaneous heat exchanger between the cold water from the main supply line at temperature t.a, and the hot water from the accumulator 1 at temperature t.s. The schematic drawing of said preheater shows the conduct 2.2 crossed by the inflow water into the accumulator, and the conduct 2.3 crossed by the water delivered from the accumulator, separated by a wall having good heat conductivity. In the example shown in figure 1, said preheater 2 is illustrated in the form of an instantaneous exchanger in countercurrent, basically composed of two coaxial pipes, 2.1 and 2.4 respectively, but naturally this can also be composed of the co-current type which is much more economical, if the inflow-outflow thermal head permitted by this version is considered sufficient. More generally, said preheater 2 can be composed of any common type of instantaneous heat exchanger, including plate type exchangers and other types of exchanger for the passive preheating of the cold water entering the accumulator 1, which will be considered further on.

Basically, according to this invention, means are provided to increase the temperature t.m of the mixture of the water as it enters, as well as the water already present in the accumulator, in such a manner that it reduces or eliminates that part of the mixture that has a t.m temperature lower than that t.ur required by the user, wherein said heating action is obtained in passive mode, provided by the water taken at a temperature far higher than the t.ur required by the user.

According to the variant in figure 1 this temperature increase t.m is obtained by preheating the supply water at t.a temperature to t.p temperature using the outflow water at t.s temperature. Since the amount of water flowing into and out from the accumulator is naturally identical, the thermal heads experienced by both water-flows inside said preheater 2 are also identical.

In order to describe the advantages of the invention, it is not possible to provide very detailed information because the mixing effect and the solutions furnished by preheater 2 according to the invention strongly depend on the model of the accumulator 1, and other conditions such as the accumulator t.s temperature, the actual t.ur temperature of the water delivered to the user, quantity and frequency of drawn-off water, etc. However, these are all aspects that technical experts skilled in the art are able to consider when sizing the best type of preheater 2 for the accumulator 1 model and according to the type of use in order to prevent the storage water t.s temperature from cooling too much dropping below the t.ur temperature required by the user. In any case, it is obvious that by introducing water into the accumulator 1 at a temperature even only a little higher than main line supply temperature, this reduces the amount of water already accumulated which is lowered by the mixing effect from a higher temperature to a lower temperature than the t.ur required, and therefore a wide range of margins exist for sizing preheater 2 or equivalent means without encountering any problems.

Mathematically, considering the outside limit as being in an exchanger in ideal countercurrent and therefore impossible, the mixing effects would cancel each other completely by heating the inflow water from t.a = 15 to t.p = 45 °C (30 °C thermal head) to the detriment of the outflow water whose temperature would drop from 75 to 45 °C. This purely theoretical consideration is useful to understand the practical limits of the preheater 2 according to the invention for all groups of current temperatures; limits however, that are far beyond actual practical needs. In fact, in order to provide a concrete example, if the outflow water was cooled by 15°C (for example from 75 to 60 °C) and therefore constantly maintained at an outflow temperature well over the t.ur required by the user, the in-flow water would be heated up to value t.p = 30 °C, drastically reducing mixing effects, and thus also considerably reducing the amount of water in the accumulator that will drop below the t.ur, as can be tested by experiment or using certain enthalpic balance formulas.

It must be stated that these heat exchanges do not provoke strong heat dispersions, but simply transfer energy
- from one volume of water located in the highest part of the accumulator 1 and because of the accumulator capacity requirements, maintained at storage temperature t.s that is too high for use
- to a volume of water located in the lowest part of the accumulator 1 that, if the temperature is too low for use, would in fact reduce the total useful volume of the accumulator 1 itself.

The general method taught by the present invention basically consists of using known means to transfer heat from one part of the accumulator 1 (the upper part) in a passive mode with storage temperature t.s higher than that required by the user t.ur, to a second part (the lower part) wherein said temperature is dropped lower than the said user temperature t.ur, through the mixing effect
- this method being applied each time hot water is drawn off
- and making sure however, that said heat transfer is not so strong that it cools the water at storage temperature t.s down to levels lower than the user temperature t.ur.

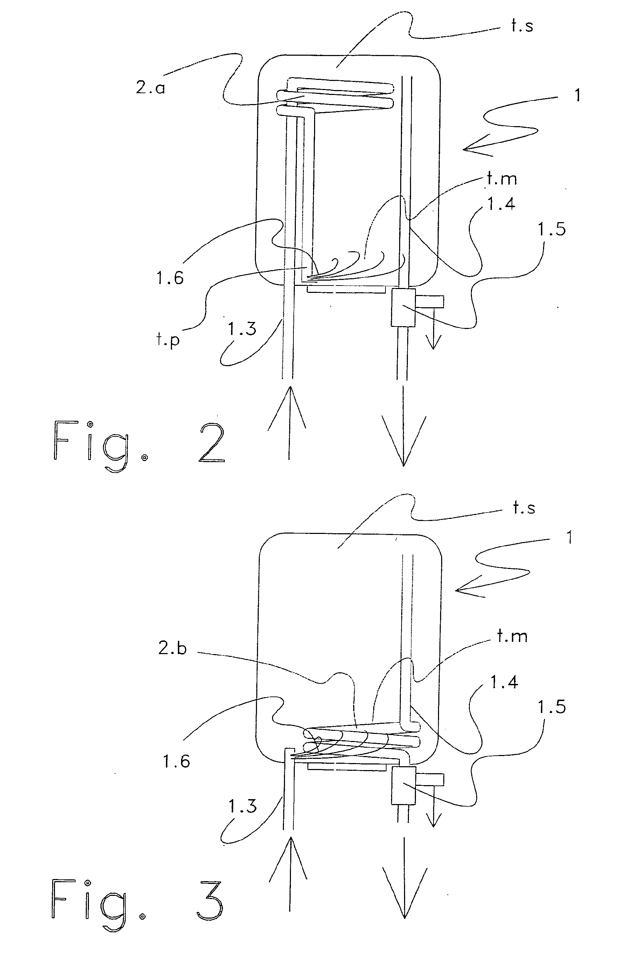

Therefore it is obvious that in order to apply the aforesaid method, different means can be envisaged instead of the instantaneous exchanger that acts as the preheater 2 in figure 1. In fact, with reference to figure 2 it is possible to preheat inflow water by passing it through a preheater 2.a composed of a coil located in the upper part of the accumulator 1, where the accumulated water is at t.s temperature or, as shown in figure 3, the outflow water heats the mixture of inflow water and the previously accumulated water gradually as it is formed, by means of a coil 2.b (that for similar reasons is also called a "preheater" here) positioned in the lower part of the accumulator 1, where the said mixture is formed.

It is obvious that since the preheater 2 shown in figure 1 exchanges heat between the inflow and outflow water to and from an accumulator 1, and since it is exterior to the accumulator, it can be easily connected to the ends of the inlet 1.3 and outlet 1.4 pipes of said accumulator 1 as an accessory device, even after the accumulator is already installed and operating. The preheater 2.a and 2.b variants shown in figures 2 and 3 should be preferably realised during the construction of the accumulator 1 and are particularly useful in the case of large capacity accumulators.

In conclusion, what is impossible according to the theoretical example of exchange in perfect countercurrent, that is where water enters the accumulator 1 at the same temperature at which it is delivered to the user (45 °C in the example), actually becomes feasible by combining the teachings previously provided in document PA1 with those of the present invention, by envisaging
- both a passive heat exchange between both waterflows according to the present invention
- as well as the application of additional heat to both water flows using an external heat source.

More generally, by combining the teachings of the PA1 document and the present document, or "active" and "passive" heating respectively, it is possible to preheat the inflow water to a t.p temperature higher than that which would be theoretically or only economically possible by using the teachings of only one of the two documents.

## Claims

1. Method for reducing or eliminating the negative effects of the phenomenon called "mixing" in an accumulator (1),
said accumulator (1) being
- adapted to maintain water at a storage temperature (t.s) using any type of heating means,
- adapted to distribute said hot water to the user as required at a user temperature (t.ur) lower than the storage temperature (t.s),
- and supplied with water introduced at supply temperature (t.a) generally equal to main distribution line temperature and in any case lower than said user temperature (t.ur),
and said mixing phenomenon being responsible for the fact that part of the previously accumulated water mainly located in the lower part of the accumulator (1) at a temperature higher than the user temperature (t.ur) is made impossible to use because it is cooled to under the same user temperature (t.ur) by the said water introduced at supply temperature (t.a) which is lower than the said user temperature (t.ur)
**characterised in that**
the amount of the water made unusable is reduced or eliminated
- by transferring in a passive manner the heat of the water in the upper part of the accumulator (1) at storage temperature (t.s) to the water basically located in the lower part of the accumulator (1) whose temperature has been lowered to under the level of the user temperature (t.ur) because of the mixing effect,
- by taking care to ensure that said heat transfer is not, in any case, so strong that it cool the storage temperature (t.s) to levels lower than the user temperature (t.ur).

2. Method according to claim 1
**characterised in that**
said heat transfer occurs externally to said accumulator (1).

3. Method according to claim 2
**characterised in that**
said heat transfer occurs
- between the water delivered to the user at storage temperature (t.s)
- and the supply water at supply water temperature (t.a).

4. Method according to claim 3
**characterised in that**
said heat transfer occurs each time hot water is drawn off.

5. Method according to claim 1
**characterised in that**
said heat transfer occurs inside the said accumulator (1).

6. Method according to claim 5
**characterised in that**
said heat transfer occurs
- between the water accumulated at the top of the said accumulator (1) at storage temperature (t.s)
- and the supply water at supply water temperature (t.a).

7. Method according to claim 5
**characterised in that**
said heat transfer occurs
- between the water delivered to the user at said storage temperature (t.s)
- and the mixed water located mainly in the part below the top of the said accumulator (1) having mixture temperature (t.m).

8. Preheater (2; 2.a; 2.b) suitable to perform the methods according to one or more of the previous claims
**characterised in that**
it is basically composed of a heat exchanger.

9. Preheater (2) according to previous claim 8
further **characterised in that**
- it is basically composed of an instantaneous heat exchanger (2)
- it exchanges heat each time water is drawn off
- between said water taken at storage temperature (t.s)
- and said water introduced at supply temperature (t.a)
said preheater (2) being sized in such a manner so that the temperature of the water delivered for use is not lowered to temperatures lower than that (t.ur) required by the same user under normal function conditions.

10. Preheater (2) according to previous claim 9
**characterised in that**
it is located in a position exterior to the said accumulator (1).

11. Preheater (2) according to at least previous claims 9 or 10
**characterised in that**
it is basically composed of a plate exchanger.

12. Preheater (2) according to at least previous claims 9 or 10
**characterised in that**
it is basically composed of a coaxial pipe exchanger.

13. Preheater (2) according to one or more of the previous claims 9 to 12
**characterised in that**
it is basically composed of a co-current exchanger.

14. Preheater (2) according to one or more of the previous claims 9 to 12
**characterised in that**
it is basically composed of a countercurrent exchanger.

15. Preheater (2.a; 2.b) according to claim 8
**characterised in that**
it is basically composed of a coil heat exchanger. (2.a; 2.b).

16. Preheater (2.a) according to claim 15
**characterised in that**
said coil (2.a)
- is located outside the said accumulator (1) at the top, and through which the supply water flows
- and exchanges heat
- between water maintained at storage temperature (t.s)
- and said water introduced at supply temperature (t.a).

17. Preheater (2.a) according to claim 15
**characterised in that**
said coil (2.b)
- is located inside said accumulator (1) at the lowest part and through which the water delivered to the user flows
- and exchanges heat
- between said water delivered to the user at storage temperature (t.s)
- and said water mixed at mixing temperature (t.m).

18. Preheater (2) according to at least claim 10
**characterised in that**
said preheater (2) can be installed on accumulators (1) already operating and installed.

19. Method for reducing or eliminating the negative effects of the so-called "mixing" an accumulator (1) according to one or more of the claims 1 to 7
**characterised in that**
"active" heating is added to the "passive" heating providing the support of an external heat energy source for the supply water.

20. Accumulator (1) adapted to implement one or more of the methods according to one of the previous claims 1 to 7 or 19.

21. Accumulator (1) according to one or more of the previous claims
**characterised in that**
it is composed of an accumulator water heater.
